(19)

**Europäisches Patentamt**
**European Patent Office**
**Office européen des brevets**

(11) **EP 4 707 858 A1**

(12) **EUROPEAN PATENT APPLICATION**

(43) Date of publication:
**11.03.2026 Bulletin 2026/11**

(21) Application number: **25200704.2**

(22) Date of filing: **08.09.2025**

(51) International Patent Classification (IPC):
***G01S 11/12*** *(2006.01)*

(52) Cooperative Patent Classification (CPC):
**G01S 11/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.09.2024 JP 2024155404**

(71) Applicant: **Canon Kabushiki Kaisha Tokyo, 146-8501 (JP)**

(72) Inventor: **MORI, Makiko Ohta-ku, Tokyo, 146-8501 (JP)**

(74) Representative: **TBK Bavariaring 4-6 80336 München (DE)**

(54) **DISTANCE MEASURING APPARATUS, MOVABLE-UNIT CONTROL APPARATUS, DISTANCE MEASURING METHOD, AND PROGRAM**

(57)    A distance measuring apparatus (2) includes a distance measuring unit for an object based on a phase difference obtained by receiving light from the object using two light receivers (161, 162, 101), the distance measuring unit including a first distance measuring unit (11) with a first base length (w), and a second distance measuring unit (11, 16) with a second base length which is longer than the first base length, an acquiring unit (24, 25) configured to acquire a characteristic of the object, and a generator (102) configured to generate distance information on the object. The generator is configured to generate the distance information using at least one of distance measurement results obtained respectively by the first distance measuring unit and the second distance measuring unit, in accordance with the characteristic.

FIG. 2

**Description**

BACKGROUND

Technical Field

The aspect of the disclosure relates to one or more embodiments of a distance measuring apparatus which generates distance information on an object.

Description of the Related Art

In order to realize a driving support system and an autonomous driving system for a movable unit such as a vehicle, position information on an object such as an obstacle around the movable unit may be acquired with high accuracy. Japanese Patent Application Laid-Open No. 2023-129847 discloses a system configured to generate three-dimensional information on an object included in an overlapping region of fields (imaging ranges) of a plurality of cameras which are installed around a vehicle.

In the system disclosed in Japanese Patent Application Laid-Open No. 2023-129847, there may exist regions in which the fields of the plurality of cameras do not overlap each other. In addition, in a case where a part of a camera's field is blocked by a body of the vehicle, the range of that part cannot be imaged.

SUMMARY

The disclosure in its first aspect provides a distance measuring apparatus as specified in claims 1 to 13.

The disclosure in its second aspect provides a movable-unit control apparatus as specified in claims 14.

The disclosure in its third aspect provides a distance measuring method as specified in claim 15.

The disclosure in its fourth aspect provides a program as specified in claim 16.

Features of the present disclosure will become apparent from the following description of embodiments with reference to the attached drawings. The following description of embodiments is described by way of example.

BRIEF DESCRIPTION OF THE DRAWINGS

Fig. 1 illustrates an arrangement of camera units on a vehicle according to a first embodiment.

Fig. 2 is a block diagram illustrating the configuration of a distance measuring apparatus according to the first embodiment.

Figs. 3A, 3B, and 3C illustrate the configurations of a monocular camera and an image sensor according to the first embodiment.

Figs. 4A and 4B illustrate a relationship between a photoelectric converter and a pupil region, and a relationship between an exit pupil and a pupil region, of the monocular camera.

Figs. 5A, 5B, and 5C are flowcharts illustrating distance measurement processing using the above monocular camera.

Figs. 6A and 6B explain the above processing.

Fig. 7 is a flowchart illustrating distance measurement processing according to the first embodiment.

Figs. 8A and 8B explain the above distance measurement processing.

Figs. 9A and 9B illustrate an arrangement of camera units on a vehicle and a block diagram of the configuration of a distance measuring apparatus according to a second embodiment.

Figs. 10A and 10B illustrate an arrangement of camera units on a vehicle and a direction of a base length of a monocular camera according to a third embodiment.

Figs. 11A, 11B, 11C, 11D, and 11E explain problems in prior art.

DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Each embodiment of the disclosure will be described with reference to the accompanying drawings.

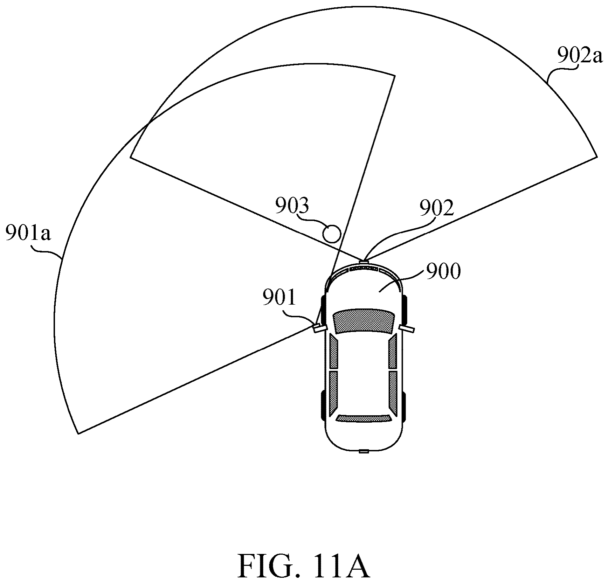

First, a problem to be solved by each embodiment will be specifically described. Fig. 11A illustrates a vehicle 900 as viewed from above. A left-front camera 901, which performs imaging in a left front direction of the vehicle 900, is installed on a left door mirror of the vehicle 900, and a front camera 902, which performs imaging in a front direction of the vehicle 900, is installed on a front grille. An imaging range, which is a field of the left-front camera 901, is denoted by a reference numeral 901a, and an imaging range of the front camera 902 is denoted by a reference numeral 902a. A reference numeral 903 denotes an obstacle which exists near the front of the vehicle 900.

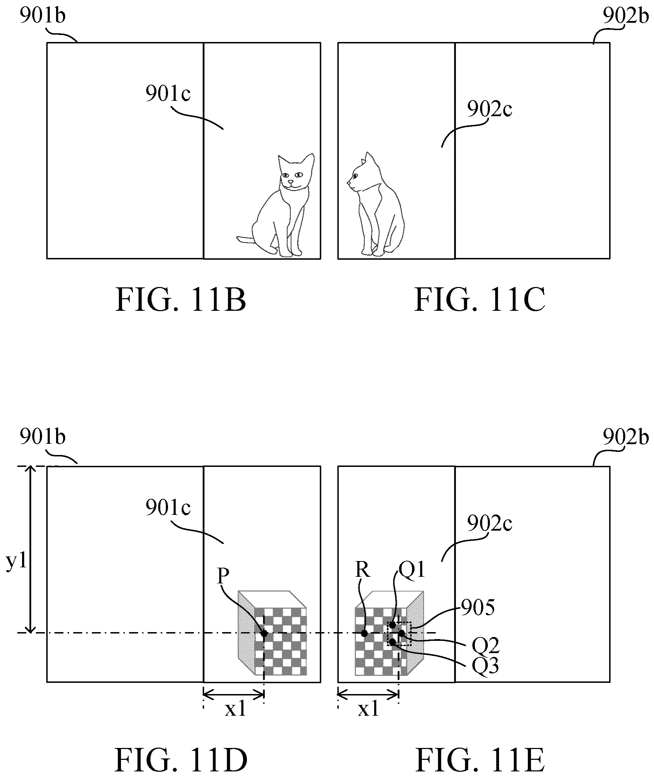

Figs. 11B and 11C respectively illustrate captured images 901b and 902b obtained by imaging a cat, which serves as the obstacle 903, by using the left-front camera 901 and the front camera 902. A region in the captured image obtained by the left-front camera 901, which is also included in the captured image 902b obtained by the front camera 902, is indicated as an overlapping region 901c. A region in the captured image 902b obtained by the front camera 902, which is also included in the captured image 901b obtained by the left-front camera 901, is indicated as an overlapping region 902c.

The cat, which is the obstacle 903, appears in each of the overlapping regions 901c and 902c. In a distance detection by stereoscopic imaging, corresponding points (a target pixel and a corresponding pixel) which mutually correspond in two captured images obtained by two cameras are detected, and a distance is calculated based on a disparity between the corresponding points. For detecting the corresponding points, template matching is used, in which a degree of correlation of patterns around the target pixel is searched.

However, the cat appearing in Fig. 11B and the cat appearing in Fig. 11C exhibit a large difference as images, and there may be cases in which corresponding points with a high degree of correlation cannot be detected by template matching. This is because the cameras 901 and 902 are separated from each other by a large distance, resulting in a long base length between them, and the directions in which images of the obstacle 903, located near the vehicle 900, are captured are significantly different, and further because the cat, which is the obstacle 903, has a nonplanar characteristic, so that different surfaces of the cat appear in the captured images. If corresponding points cannot be detected, a distance measurement value for the target pixel cannot be obtained, and if distance measurement values cannot be obtained for many of the pixels in which the cat appears, a distance measurement for the cat cannot be performed.

Figs. 11D and 11E respectively illustrate captured images 901b and 902b obtained by capturing images of an object having a repetitive pattern as the obstacle 903, by using the left-front camera 901 and the front camera 902. In the overlapping regions 901c and 902c of the captured images 901b and 902b, the object is present. In this case, there may be instances in which corresponding points are erroneously detected by template matching. This is because, in a case where the cameras 901 and 902 are separated by a large distance and the disparity is large, images having a high degree of correlation may be detected within an image range searched in the template matching.

The captured image 901b illustrated in Fig. 11D is used as a reference image, and a coordinate corresponding to a point P in the reference image is searched for in the captured image 902b illustrated in Fig. 11E. In this case, a search region for a corresponding point corresponding to a coordinate (x1, y1) in the overlapping region 901c of the reference image is defined as a region 905 centered at the coordinate (x1, y1) in the overlapping region 902c. In a case where points having a high degree of correlation with the point P and its surrounding image are searched for within the search region 905, points Q1, Q2, and Q3 become candidates. However, the correct corresponding point is a point R, and thus mismatching occurs. In this manner, in the case of an object having characteristics such as a repetitive pattern, incorrect distance measurement values are likely to be obtained.

Each embodiment performs an accurate distance measurement for an object regardless of the characteristics of the object as described above.

FIRST EMBODIMENT

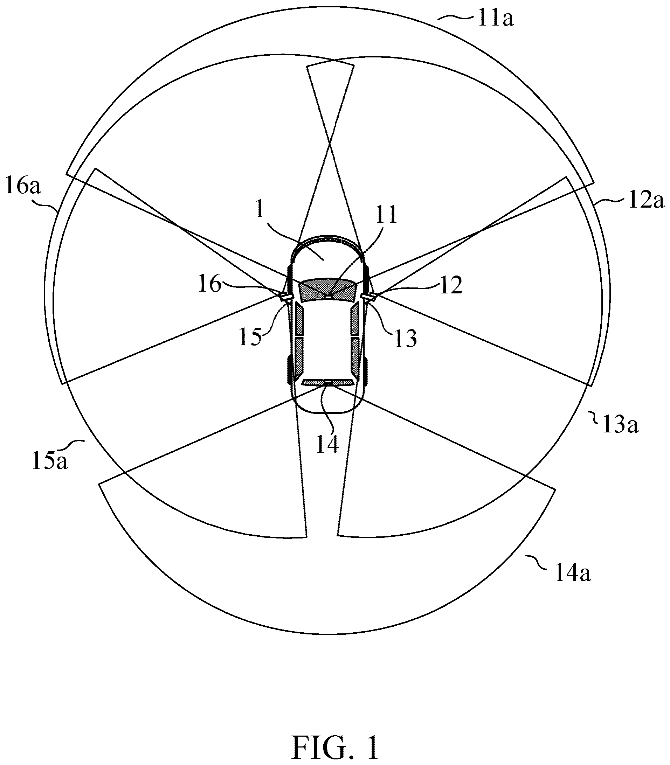

Fig. 1 is a top view which illustrates a vehicle (such as an automobile) 1, which serves as a movable unit in a first embodiment, and six camera units 11 to 16 installed on the vehicle 1. The camera units 11 to 16 are all monocular cameras which function as image pickup apparatuses which generate captured images by imaging an object with an image sensor through an optical system, and each has a distance measuring function using phase-difference detecting pixels serving as phase difference sensors included in the image sensor. The camera units 11 to 16 each correspond to first distance measuring unit.

In this embodiment, as illustrated in Fig. 1, the camera units 11, 12, 13, 14, 15, and 16 are installed at the front, right front, right rear, rear, left rear, and left front of the vehicle 1, respectively. The number of camera units is not limited to six and may be any number equal to or greater than two. The camera units 11, 12, 13, 14, 15, and 16 respectively have imaging ranges (fields of view) directed to the front, right front, right rear, rear, left rear, and left front of the vehicle 1. These camera units 11 to 16 basically have the same constituent elements (an optical system and an image sensor). The optical system of each camera unit has a wide angle of view of approximately 120 degrees or more in a horizontal direction. In Fig. 1, reference numerals 11a, 12a, 13a, 14a, 15a, and 16a denote imaging ranges of the camera units 11, 12, 13, 14, 15, and 16, respectively.

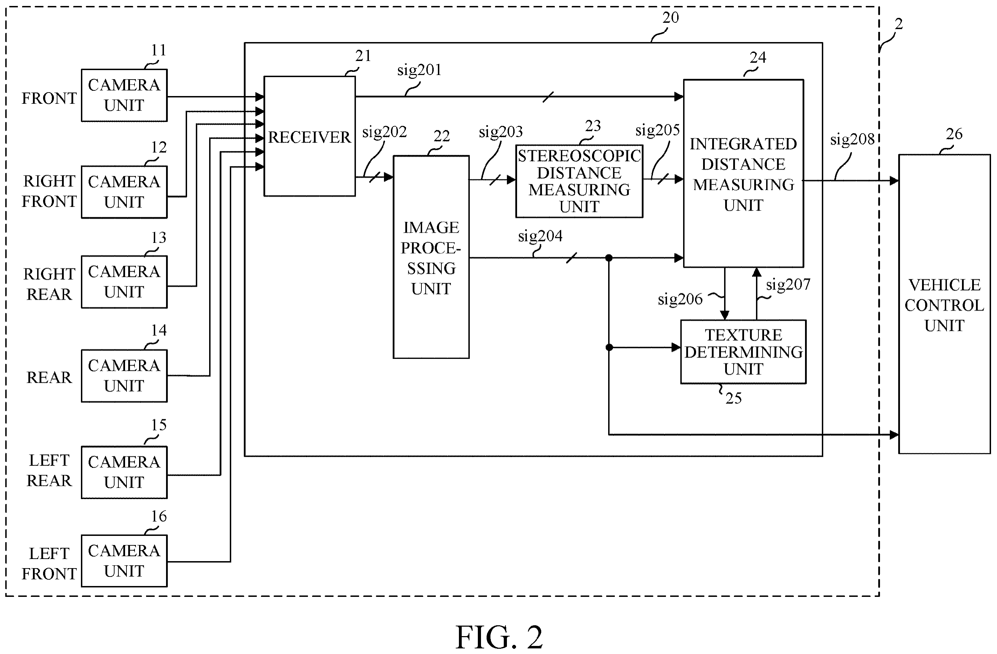

Fig. 2 illustrates the configuration of a distance measuring apparatus 2. The distance measuring apparatus 2 includes the above-described six camera units 11 to 16 and a processor 20.

CONFIGURATION OF MONOCULAR CAMERA

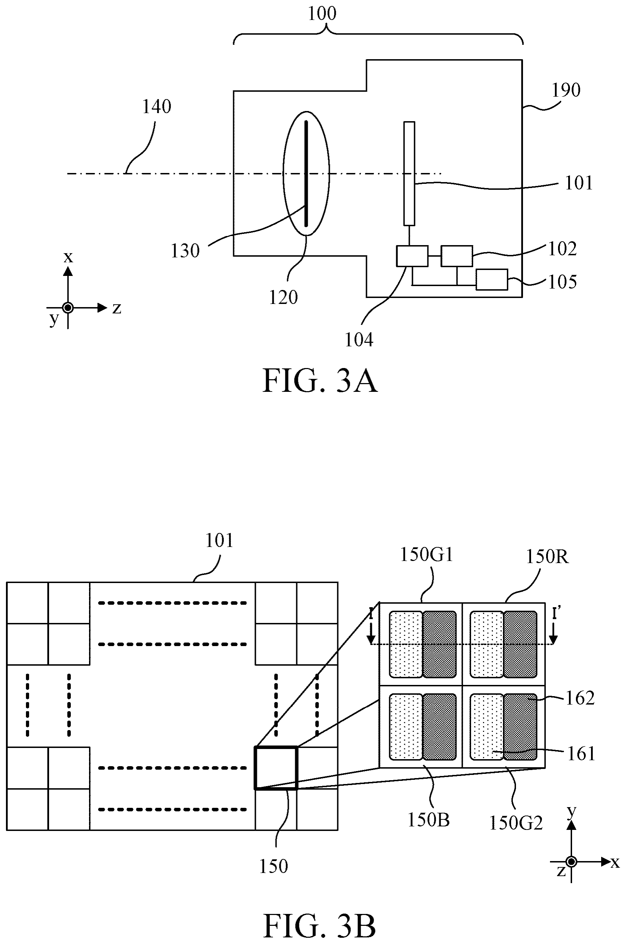

Fig. 3A illustrates the configuration of a monocular camera 100 that is used as each of the camera units 11 to 16. The monocular camera 100 includes an optical system 120, an image sensor 101, a distance calculator 102, an image memory 104, and a transmitter 105, which are disposed within a housing 190. The distance calculator 102 can be configured using a logic circuit. As another form of the distance calculator 102, it may be configured with a CPU (one or more processors configured to execute instructions) and a memory which stores a calculation processing program (one or more memories storing the instructions).

The optical system 120 images light from an object on an imaging surface of the image sensor 101. The optical system 120 includes a plurality of lens units (not illustrated), arranged in a direction in which its optical axis 140 extends, and has an exit pupil 130 at a position spaced from the image sensor 101 by a predetermined distance. The direction in which the optical axis 140 extends is a direction parallel to a z-axis in the figure, and will also be referred to as an optical axis direction hereinafter. In addition, an x-axis and a y-axis in the figure are respectively orthogonal to the optical axis 140 and also orthogonal to each other.

The image sensor 101 is a photoelectric conversion element such as a CMOS sensor or a CCD sensor, and generates a captured image (image data) by photoelectrically converting an object image formed by the optical system 120.

CONFIGURATION OF IMAGE SENSOR

Fig. 3B illustrates an imaging surface (xy plane) of the image sensor 101. On the imaging surface, a plurality of pixel groups 150 of two rows x two columns arrayed. In each pixel group 150, green pixels 150G1 and 150G2 are arranged in a diagonal direction, and a red pixel 150R and a blue pixel 150B are arranged as the other two pixels.

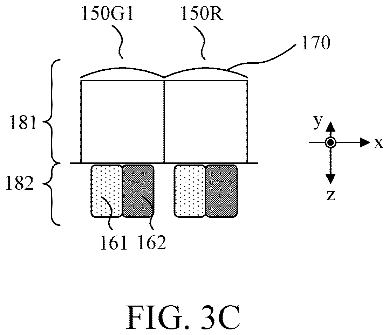

Fig. 3C illustrates an xz cross section of one pixel group 150 taken along a line I-I' illustrated in Fig. 3B. Each pixel (green pixels 150G1 and 150G2, red pixel 150R, and blue pixel 150B) includes a light guide layer 181 and a light receiving layer 182 which are arranged in the optical axis direction. In the light receiving layer 182, two photoelectric converters (a first photoelectric converter 161 and a second photoelectric converter 162) which photoelectrically convert incident light, are arranged side by side in the x-direction. These two photoelectric converters correspond to two light receivers used in a monocular distance measurement in a monocular camera. Further, one camera unit that is used in the monocular distance measurement corresponds to one distance measuring unit.

In the light guide layer 181, a microlens 170 for efficiently guiding light incident from the optical system 120 to the two photoelectric converters, a color filter (not illustrated) which transmits light in a predetermined wavelength band, and wirings (not illustrated) for reading out signals from an image and for driving the pixels are arranged.

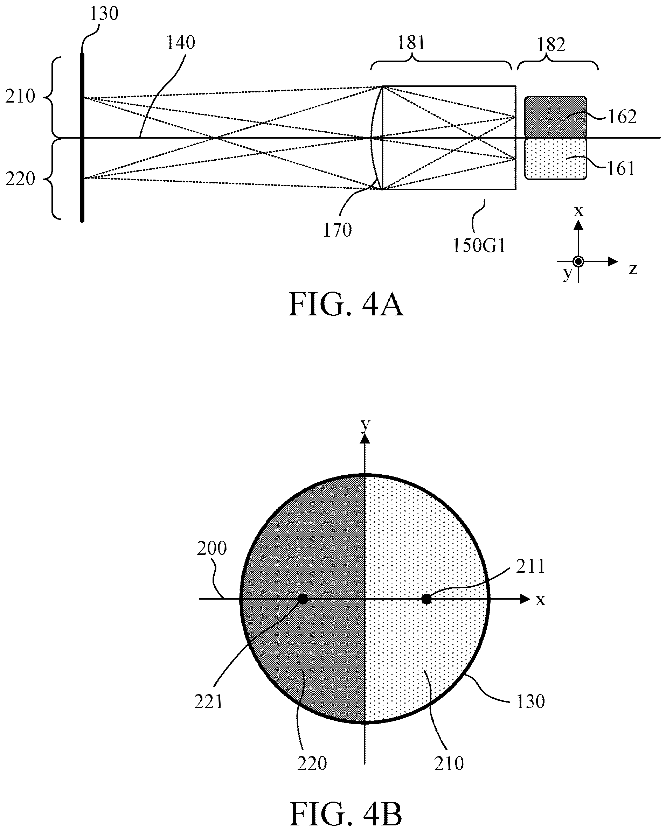

Fig. 4A illustrates an xz cross section of the exit pupil 130 of the optical system 120 illustrated in Fig. 3A and the green pixel 150G1, which is a representative example of the plurality of pixels in the image sensor 101. The microlens 170 provided in the light guide layer 181 of the pixel 150G1 is arranged such that the exit pupil 130 and the light receiving layer 182 are optically conjugate with each other. As a result, as illustrated in Fig. 4A, a light beam which has passed through a first pupil region 210, which is a partial pupil region of the exit pupil 130, enters the first photoelectric converter 161, and a light beam which has passed through a second pupil region 220, which is a different partial pupil region from the first pupil region 210, enters the second photoelectric converter 162.

By combining signals from the respective first photoelectric converters 161 provided in the plurality of pixels, first phase-difference image data (A image data) is generated. Also, by combining signals from the respective second photoelectric converters 162 provided in the plurality of pixels, second phase-difference image data (B image data) is generated. From the first phase-difference image data, an intensity distribution of an A image, which is mainly formed on the imaging surface by the light beam which has passed through the first pupil region 210, can be obtained. From the second phase-difference image data, an intensity distribution of a B image, which is mainly formed on the imaging surface by the light beam which has passed through the second pupil region 220, can be obtained.

The image memory 104 illustrated in Fig. 3A temporarily stores the first phase-difference image data and the second phase-difference image data which are output from the image sensor 101. The distance calculator 102 reads out the first phase-difference image data and the second phase-difference image data from the image memory 104 and generates distance data and distance reliability data by performing a distance measurement processing, which will be described later.

The transmitter 105 transmits the first or second phase-difference image data stored in the image memory 104, and the distance data and the distance reliability data which correspond to the phase-difference image data, to the processor illustrated in Fig. 2. In this case, for example, a serial interface for high-speed data transmission is used.

A description will now be given of the distance measurement processing performed by the distance calculator 102.

DISTANCE MEASUREMENT PRINCIPLE

Fig. 4B illustrates the exit pupil 130 of the optical system 120 as viewed from the center image height, which is an intersection point between the optical axis 140 and the image sensor 101 (imaging surface) illustrated in Fig. 3A. A centroid (center-of-gravity) position of the first pupil region 210 is indicated as a first centroid position 211, and a centroid position of the second pupil region 220 is indicated as a second centroid position 221. In this embodiment, the first centroid position 211 is decentered (shifted) from the center of the exit pupil 130 along a first axis 200 parallel to the x-axis. On the other hand, the second centroid position 221 is decentered (shifted) in a direction opposite to the first centroid position 211 along the first axis 200. That is, the first pupil region 210 and the second pupil region 220 are decentered in different directions along the first axis 200.

Since the first photoelectric converter 161 of the green pixel 150G1 illustrated in Fig. 4A is shifted in the -x direction from the center of the green pixel 150G1 in the xy plane, the first centroid position 211 is decentered in the +x direction along the first axis 200. On the other hand, since the second photoelectric converter 162 of the green pixel 150G1 is shifted in the +x direction from the center of the green pixel 150G1 in the xy plane, the second centroid position 221 is decentered in the -x direction along the first axis 200.

A relative positional shift amount between the first phase-difference image data and the second phase-difference image data corresponds to an image shift amount as a phase difference (retardation) between the A image and the B image. The image shift amount is an amount corresponding to a defocus amount on the imaging surface. Therefore, calculating the image shift amount between the first phase-difference image data and the second phase-difference image data and converting the image shift amount into a defocus amount using a conversion coefficient can calculate a distance to the object.

In Figs. 4A and 4B, the first pupil region 210 is illustrated as a region where x is positive, and the second pupil region 220 is illustrated as a region where x is negative. However, light which actually reaches the light receiving layer 182 has a certain spread due to diffraction of light. In addition, light incident on the light receiving layer 182 also has a certain spread due to crosstalk of carriers within the light receiving layer 182. That is, even in a case where a light beam which has passed through the region where x is negative enters the second photoelectric converter 162, the first photoelectric converter 161 has light receiving sensitivity, although it is low. Thus, in practice, the first pupil region 210 and the second pupil region 220 actually have overlapping regions with each other. However, in this embodiment, the first pupil region 210 and the second pupil region 220 are clearly distinguished from each other for simple description.

DISTANCE MEASUREMENT PROCESSING PROCEDURE

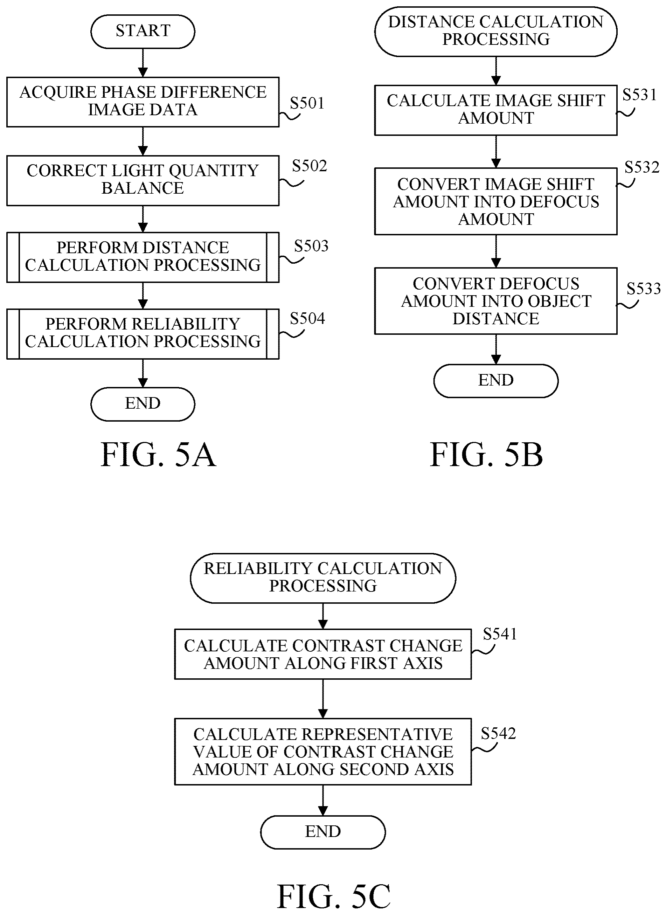

Flowcharts in Figs. 5A, 5B, and 5C illustrate distance measurement processing executed in accordance with a program by the distance calculator (generator) 102, which includes a computer such as a CPU or an MPU. The term "step" means a process.

In step S501 of Fig. 5A, the distance calculator 102 acquires the first phase-difference image data and the second phase-difference image data, which have been acquired through the image sensor 101 and stored in the image memory 104.

Next, in step S502, the distance calculator 102 performs light quantity balance correction processing for correcting an imbalance in light quantity balance between the first phase-difference image data and the second phase-difference image data. The correction of the light quantity balance can be performed by a known method, such as calculating a correction coefficient using captured image data generated by capturing an image of a uniform planar light source in advance with the monocular camera 100, and applying the correction coefficient to at least one of the first phase-difference image data and the second phase-difference image data.

Next, in step S503, the distance calculator 102 performs distance calculation processing for calculating the distance to the object using the first phase-difference image data and the second phase-difference image data which have undergone the light quantity balance correction processing.

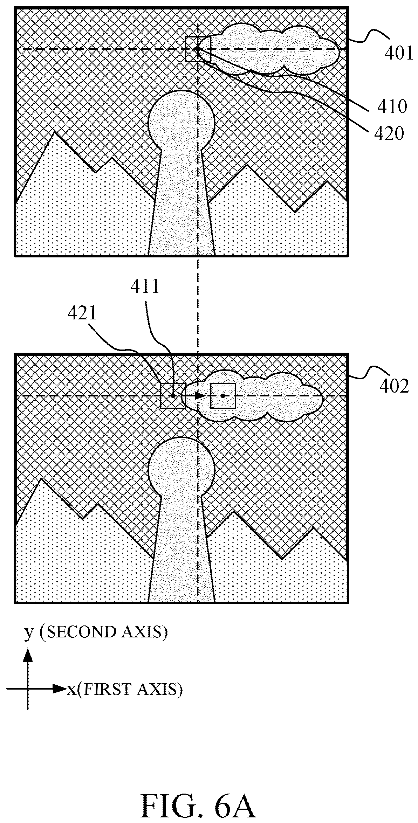

Fig. 5B illustrates the distance calculation processing of step S503. In step S531, an image shift amount of the second phase-difference image data with respect to the first phase-difference image data is calculated. A method for calculating the image shift amount will be described with reference to Fig. 6A. In Fig. 6A, reference numeral 401 denotes the first phase-difference image data selected as basis image data, and reference numeral 402 denotes the second phase-difference image data selected as reference image data. Here as well, an axis parallel to the x-axis is defined as the first axis.

The distance calculator 102 first sets a target point (attention point or point of interest) 410 within the first phase-difference image data 401, and sets a matching region 420 centered on the target point 410. If the matching region 420 is too small, a calculation error of the image shift amount due to local operations may occur. For this reason, the matching region 420 may be set to a size of, for example, approximately 9 pixels $\times$ 9 pixels.

Next, the distance calculator 102 sets a reference point 411 within the second phase-difference image data 402, and sets a matching region 421 centered on the reference point 411. The size of the matching region 421 may be the same as that of the matching region 420.

The distance calculator 102 calculates the degree of correlation, along the first axis, between the image data within the matching region 420 of the first phase-difference image data and the image data within the matching region 421 of the second phase-difference image data. The distance calculator 102 sequentially moves the reference point 411 (the matching region 421) along the first axis and calculates the degree of correlation, and adopts the reference point 411 having the highest degree of correlation as a corresponding point. Then, a relative positional shift amount between the target point 410 and the corresponding point is calculated as the image shift amount. As a method for calculating the degree of correlation, a known method such as sum of squared difference (SSD), which evaluates the sum of squared differences between the first phase-difference image data and the second phase-difference image data, can be used.

Next, in step S532, the distance calculator 102 converts the image shift amount calculated in step S531 into a defocus amount, which is a distance from the image sensor 101 to a focal point of the optical system 120, using a predetermined conversion coefficient. More specifically, when the image shift amount is denoted as d, the base length as the conversion coefficient is denoted as w, and the distance from the image sensor 101 to the exit pupil 130 is denoted as L, the defocus amount $\Delta L$ is calculated using the following equation (1):

$$\Delta L = \frac{d \cdot L}{w - d} \qquad (1)$$

In equation (1), the base length w is a distance along the first axis 200 between the first centroid position 211 and the second centroid position 221 illustrated in Fig. 4B, and corresponds to a first base length. Instead of equation (1), the defocus amount $\Delta L$ may alternatively be calculated using the following equation (2), based on the approximation that w >> d.

$$\Delta L = Gain \cdot d \qquad (2)$$

Next, in step S533, the distance calculator 102 converts the defocus amount calculated in step S532 into the distance to the object. The conversion from the defocus amount to the object distance may be performed using an imaging relationship of the optical system 120.

The distance calculator 102 performs the distance calculation processing for all target points which can be set within the first phase-difference image data 401. As a result, distance data indicating the distance to the object for each pixel within the imaging range is generated.

In step S504 of Fig. 5A, the distance calculator 102 performs reliability calculation processing for calculating a reliability of the distance calculated in step S533, based on the first phase-difference image data selected as the reference image data in step S503.

The flowchart of Fig. 5C illustrates the reliability calculation processing of step S504. In step S541, the distance calculator 102 calculates a contrast change amount which represents a magnitude of contrast change.

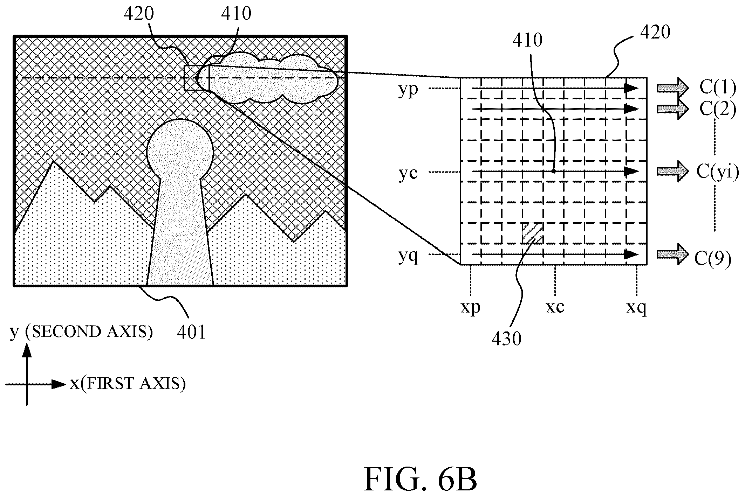

The method for calculating the contrast change amount will be described with reference to Fig. 6B. Fig. 6B illustrates the target point 410 for calculating the image shift amount in step S531 and the matching region 420 centered on the target point 410. In Fig. 6B, the matching region 420 is illustrated in an enlarged manner, and a hatched region 430 represents one pixel. Here, the matching region 420 is defined as having a range from pixel coordinate xp to xq in the x-axis direction and from pixel coordinate yp to yq in the y-axis direction, and the coordinate of the target point 410 is defined as (xc, yc).

The distance calculator 102 calculates, as the contrast change amount at the target point 410 (matching region 420), a dispersion of pixel values in the image data included in the matching region 420 of the first phase-difference image data, for each y-coordinate along the first axis (x-axis). That is, the contrast change amount C(x, y) (C(1) to C(yi) to C(9) in Fig. 6B) is calculated using the following equation (3):

$$C(x,y) = \frac{1}{Nx}\sum_{xi=xp}^{xq}(I(xi,y) - Iave)^2 \qquad (3)$$

$$Iave = \frac{1}{Nx}\sum_{xi=xp}^{xq}I(xi,y)$$

where I(x, y) represents the pixel value of the first phase-difference image data at the pixel position (x, y), and Nx represents the number of pixels in the x-axis direction included in the matching region 420.

Next, in step S542, the distance calculator 102 calculates a representative value of the contrast change amount C(x, y) at the target point 410 along a second axis (y-axis). More specifically, as the representative value of the contrast change amount C(x, y), an average value of the contrast change amount C(x, y) is calculated along the second axis within the range of the matching region 420. That is, the representative value Conf(x, y) of the contrast change amount at the target point 410 is calculated using the following equation (4):

$$Conf(x,y) = \frac{1}{Ny}\sum_{yi=yp}^{yq}C(x,yi) \qquad (4)$$

In equation (4), Ny represents the number of pixels in the y-axis direction included in the matching region 420. In this embodiment, the representative value Conf of the contrast change, which is calculated in this manner, is used as a distance reliability.

The greater the contrast change amount C(x, y), which is the dispersion of pixel values of the first phase-difference image data calculated along the first axis, the greater the contrast change in the direction of the first axis. Furthermore, averaging the dispersion of pixel values along the second axis can calculate the magnitude of the contrast change amount which contributes to the calculation of the image shift amount of the first phase-difference image data included in the matching region 420.

In this embodiment, the first photoelectric converter 161 and the second photoelectric converter 162 are arranged along the first axis (x-axis) in each pixel. Therefore, an image shift occurs along the first axis between the first phase-difference image data and the second phase-difference image data. In such a case, for an object having a large contrast change in a direction parallel to the first axis, the image shift amount can be detected with high accuracy. On the other hand, for an object having a small contrast change in the direction parallel to the first axis, the calculation error in the image shift amount becomes large.

The distance calculator 102 performs the above-described reliability calculation processing for all target points which can be set within the first phase-difference image data 401. As a result, reliability data indicating the reliability of the distance to the object calculated for each pixel within the imaging range is generated.

In the monocular camera 100, when the power is turned on and parameters for imaging and distance measurement are set, captured image data and the first and second phase-difference image data are sequentially generated for each frame by the image sensor 101, and these are stored in the image memory 104. The distance calculator 102 generates the distance data and the reliability data for each frame. Then, the captured image data, the distance data, and the reliability data are sequentially output via the transmitter 105.

The processor 20 illustrated in Fig. 2 sequentially receives the captured image data, the distance data, and the reliability data from the plurality of camera units 11 to 16, and outputs the distance measurement data and the captured image data after image processing to a vehicle control unit 26 such as an electronic control unit (ECU) mounted on the vehicle 1. The processor 20 includes a computer such as a CPU, and includes a receiver 21, an image processing unit 22, a stereoscopic distance measuring unit 23, an integrated distance measuring unit 24, and a texture determining unit 25.

The receiver 21 receives the captured image data, the distance data, and the reliability data from each of the camera units 11 to 16 via a serial interface for high-speed image transmission. The receiver 21 outputs, as a monocular distance measurement value signal sig201, a monocular distance measurement value (monocular distance measurement result), which is a set of the distance data and the reliability data of each of the camera units 11 to 16, and also outputs the respective captured image data as an image signal sig202.

The image processing unit 22 performs image processing for the input image signal sig202. More specifically, the image processing unit 22 performs sensor correction, offset adjustment, and HDR processing. The image processing unit 22 also performs distortion correction processing for the captured image data of a pair of camera units, among the camera units 11 to 16, whose imaging ranges overlap (that is, which perform stereoscopic imaging), based on the optical characteristics of the camera units, the installation coordinates on the vehicle 1, and posture information on the vehicle 1. As a result, a pair of captured image data enabling stereoscopic viewing is generated and output as a stereoscopic image signal sig203. Furthermore, the image processing unit 22 performs optical correction, debayer processing, white balance adjustment, gain and offset adjustment, gamma processing, and color matrix processing on the captured image data from each of the camera units 11 to 16, and outputs it as an image-processed signal sig204.

The image-processed signal sig204 may be used as omnidirectional image data, which includes, without discontinuity, image data covering a 360-degree range around the vehicle 1, by performing distortion correction and composition processing on the captured image data after image processing.

Image processing parameters are stored in a ROM (not illustrated) provided in the processor 20 and are set at start-up. Alternatively, the image processing parameters may be set by reading out information such as the number of pixels, pixel arrangement information, photoelectric conversion characteristics, y characteristics, and sensitivity characteristics, which are stored in ROMs (not illustrated) provided in the camera units 11 to 16 via a serial interface for high-speed image transmission. Furthermore, the image processing parameters may be configured to be set externally according to external environments or the like.

The stereoscopic distance measuring unit 23 performs a stereoscopic distance measurement in an overlapping region of imaging ranges of two camera units which have performed the stereoscopic imaging, using the input stereoscopic image signal sig203, and outputs a stereoscopic distance measurement value signal sig205. In the stereoscopic distance measurement, the two image sensors of the two camera units which perform the stereoscopic imaging correspond to two light receivers, and an optical axis interval between the two camera units corresponds to a second base length which is longer than the first base length of a single monocular camera. A set of the two camera units which perform the stereoscopic distance measurement and the stereoscopic distance measuring unit 23 together constitute one second distance measuring unit.

The stereoscopic distance measurement value signal sig205 includes distance data and reliability data as stereoscopic distance measurement values (stereoscopic distance measurement results) obtained through the stereoscopic distance measurement. The stereoscopic distance measurement values are calculated from an image shift amount (phase difference) obtained by performing the template matching using a degree of correlation on the two pieces of captured image data indicated by the stereoscopic image signal sig203, in the same manner as the monocular distance measurement values (distance data and reliability data).

The integrated distance measuring unit 24 generates and outputs an integrated distance measurement value signal sig208 from the input monocular distance measurement value signal sig201, the stereoscopic distance measurement value signal sig205, and the image-processed signal sig204. The integrated distance measurement value signal sig208 includes distance data and reliability data generated by integrating the monocular distance measurement value signal sig201 and the stereoscopic distance measurement value signal sig205. Upon executing the integration processing, a coordinate information signal sig206, which indicates a predetermined region of the image-processed signal sig204, is input to the texture determining unit 25, and a texture determination result signal sig207 is obtained from the texture determining unit 25.

The texture determining unit 25 determines a texture (pattern) of a region specified by the coordinate information signal sig206 of the image-processed signal sig204, and outputs the texture determination result signal sig207, which is information on characteristics of an object. The integrated distance measuring unit 24 and the texture determining unit 25 may be configured using logic circuits. Alternatively, the integrated distance measuring unit 24 and the texture determining unit 25 may be configured with an arithmetic circuit such as a GPU or CPU and a memory storing arithmetic processing programs.

The vehicle control unit 26 receives the integrated distance measurement value signal sig208 and the image-processed signal sig204 which are output from the distance measuring apparatus 2 (processor 20), and performs a vehicle control including collision avoidance operations such as steering and braking of the vehicle 1, in accordance with the distance to an object around the vehicle 1 included in the integrated distance measurement value signal sig208. The distance measuring apparatus 2 and the vehicle control unit 26 together constitute a movable-unit control apparatus.

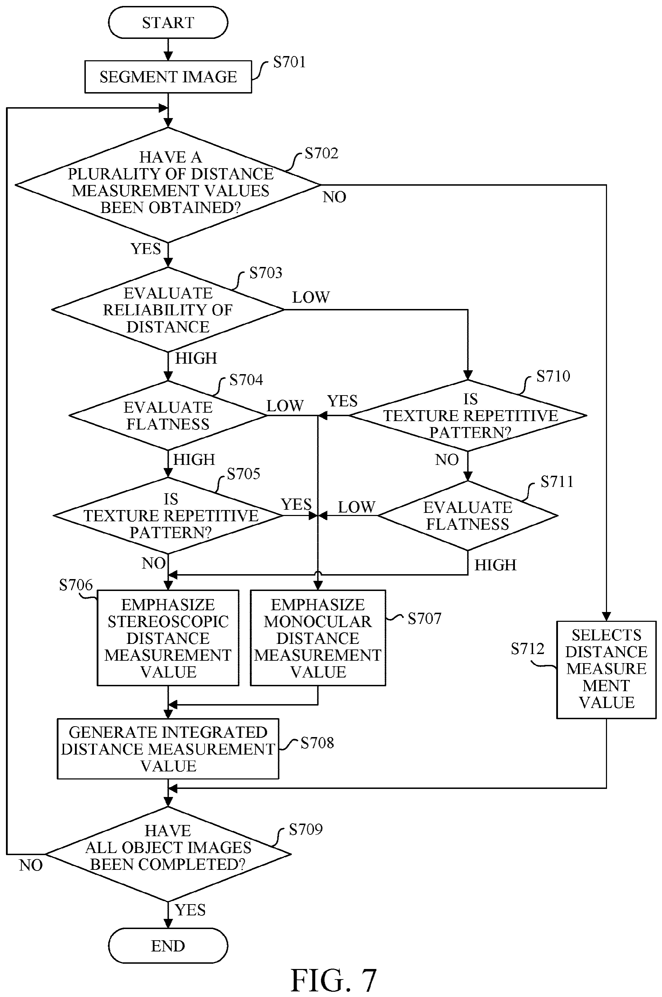

A flowchart of Fig. 7 illustrates calculation processing of the integrated distance measurement value signal sig208, which is executed by the integrated distance measuring unit 24, serving as a generator, in accordance with a program. The integrated distance measuring unit 24 executes this processing for each frame after activation of the distance measuring apparatus 2.

In step S701, the integrated distance measuring unit 24 segments the image indicated by the image-processed signal sig204 into a plurality of object regions, each of which is a region for each object appearing in the image. In this image segmentation, pixels having a distance difference from a target pixel which is equal to or less than a threshold value as a predetermined value are grouped as the same object region, based on the distance data included in the monocular distance measurement value signal sig201 or the stereoscopic distance measurement value signal sig205. In a case where a plurality of monocular distance measurement values and stereoscopic distance measurement values are obtained in the overlapping region of the imaging ranges of the camera units, the distance data corresponding to the higher reliability data is adopted. This embodiment can also identify object regions from the image-processed signal sig204 by using known machine learning techniques such as semantic segmentation, and segment the image into the object regions.

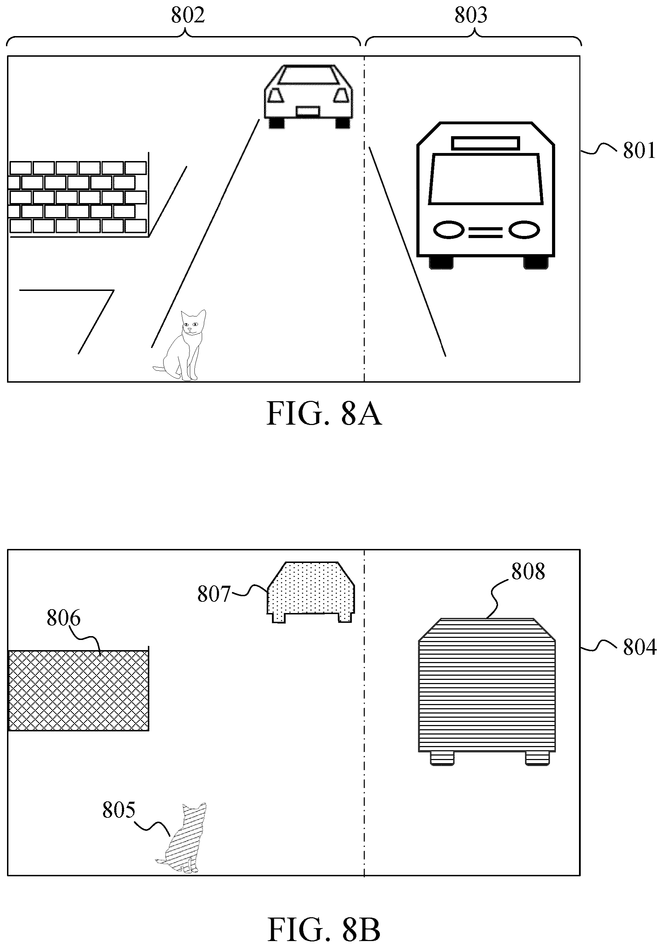

In Fig. 8A, reference numeral 801 denotes an example of an image obtained by performing image processing on the captured image data of the front camera unit 11. In a region 801, as objects, a cat is appearing in the foreground, a wall surface is appearing on the left side, a preceding vehicle is appearing in the front, and an oncoming vehicle is appearing on the right side.

Reference numeral 802 denotes an overlapping region between an imaging range of the front camera unit 11 and an imaging range of the left-front camera unit 16, and reference numeral 803 denotes a non-overlapping region, within the imaging range of the front camera unit 11, which is outside the imaging range of the left-front camera unit 16.

An image 804 illustrated in Fig. 8B includes a plurality of object regions 805 to 808 which have been obtained by segmenting the image 804 for each object in step S701. More specifically, the image includes a cat region 805, a wall surface region 806, a preceding vehicle region 807, and an oncoming vehicle region 808.

Next, in step S702, the integrated distance measuring unit 24 determines, for each of the plurality of object regions, whether or not a plurality of distance measurement values have been obtained. In a case where the plurality of distance measurement values have been obtained, the processing of step S703 is performed, whereas in a case where the plurality of distance measurement values have not been obtained, the processing of step S712 is performed.

In the example of Fig. 8B, with respect to the wall surface region 806 and the preceding vehicle region 807 within the overlapping region 802, a total of three distance measurement values are obtained: two monocular distance measurement values from the camera units 11 and 16, and one stereoscopic distance measurement value. With respect to the cat region 805, two monocular distance measurement values from the camera units 11 and 16 are obtained, but whether a stereoscopic distance measurement value is obtained or not depends on conditions such as a posture of the cat. This is because, as explained in the above-described problem, in stereoscopic vision with a long base length, there may be cases where corresponding points cannot be detected during matching of an object having low flatness and located in the vicinity of the vehicle 1.

With respect to the oncoming vehicle region 808 within the non-overlapping region 803, only a single monocular distance measurement value which is input from the camera unit 11 is obtained. For this reason, in step S712, the integrated distance measuring unit 24 selects the monocular distance measurement value input from the camera unit 11 as an integrated distance measurement value.

Next, in step S703, the integrated distance measuring unit 24 evaluates the reliability of the distance to the object for each of the plurality of object regions. As described with reference to Fig. 5C, the reliability of the distance is determined using, for example, the contrast change amount. In a case where the reliability is equal to or greater than a threshold value as a predetermined value, the processing of step S704 is performed, and in a case where the reliability is less than the threshold value, the processing of step S710 is performed.

That is, the order of the subsequent determination processing differs depending on whether the reliability of the distance is high or low. In a case where the reliability of the distance is high, the integrated distance measuring unit 24 evaluates, in step S704, the flatness, which is one of the characteristics of the object. Since the distance is used in the evaluation of flatness, in a case where the reliability of the distance is low, a determination of the repetitive pattern is performed in advance in step S710 so as to avoid an incorrect evaluation of flatness. For the evaluation of flatness using the distance, the dispersion of the distance data corresponding to the object region or the like is used. In step S704, the integrated distance measuring unit 24 determines whether the flatness of the object of each object region is equal to or greater than a threshold value as a predetermined value. In a case where the flatness is equal to or greater than the threshold value (i.e., high), the integrated distance measuring unit 24 performs the processing in step S705, and in a case where the flatness is less than the threshold value (i.e., low), the processing in step S707 is performed.

In step S705, the integrated distance measuring unit 24 causes the texture determining unit 25 to determine whether or not the texture (pattern) of each object region is the repetitive pattern. In a case where the texture is the repetitive pattern, the processing of step S707 is performed, and in a case where the texture is not the repetitive pattern, the processing of step S706 is performed.

The texture determining unit 25 determines whether or not the texture is the repetitive pattern from the input image-processed signal sig204. In this process, the integrated distance measuring unit 24 generates the coordinate information signal sig206 which specifies each object region, and inputs it to the texture determining unit 25. The texture determining unit 25 determines whether or not the texture of the object region specified by the coordinate information signal sig206 in the image-processed signal sig204 is the repetitive pattern, and outputs the texture determination result signal sig207 for each region. A known method can be used for the determination of the repetitive pattern. For example, the object region to be determined may be further segmented into smaller subregions, feature values may be obtained for each subregion, and similarity with surrounding regions may be evaluated. For example, in the wall surface region 806 illustrated in Fig. 8B, similarity is observed in the area, average luminance, and luminance gradient of each block-shaped subregion, and therefore the texture is determined to be the repetitive pattern. According to this method, as for the cat region 805 and the preceding vehicle region 802, the textures are determined not to be the repetitive patterns.

As described above, the integrated distance measuring unit 24 and the texture determining unit 25, which respectively determine the flatness and the texture, correspond to an acquiring unit for acquiring characteristics of the object, and are implemented by the CPU (one or more processors).

In a case where the reliability of the distance is less than the threshold value in step S703, the integrated distance measuring unit 24, in step S710, causes the texture determining unit 25 to determine whether or not the texture of the object region is the repetitive pattern, similarly to step S705. In a case where the texture is the repetitive pattern, the processing of step S707 is performed and in a case where the texture is not the repetitive pattern, the processing of step S711 is performed.

In step S711, the integrated distance measuring unit 24 determines the flatness of an object for each object region, similarly to step S704. In a case where the flatness is equal to or greater than the threshold, the processing of step S706 is performed, and in a case where the flatness is less than the threshold, the processing of step S707 is performed. Since the determination of a repetitive pattern involves a large amount of computation and imposes a high processing load, in a case where the reliability of the distance is high, by performing the flatness determination first, the object regions in which the repetitive pattern determination is to be performed can be limited, thereby reducing the processing load and decreasing power consumption.

As described in steps S704 and S705, and steps S710 and S711, in this embodiment, the order of determination for multiple characteristics (flatness and texture in this embodiment) is changed according to the reliability of the distance.

In step S704, the flatness of an object may be determined by performing object recognition based on the image-processed signal sig204. For example, in a case where the object is a human or an animal, the flatness can be determined to be low, whereas if the object is a structure such as a vehicle or a building, the flatness can be determined to be high. Alternatively, the flatness of the object may be determined by evaluating how the shadow of the object is formed.

Furthermore, in a case where a human or an animal is stereoscopically imaged by two camera units and such an object is located at a distance sufficiently far relative to the base length, the difference between the captured image data generated by the two camera units becomes small. Thus, a corresponding point can be detected by matching. Therefore, instead of the actual flatness of the object, whether the apparent flatness, which differs depending on the distance to the object, is equal to or greater than a threshold may be determined.

In step S706, the integrated distance measuring unit 24 sets a weighting coefficient which emphasizes the stereoscopic distance measurement value. More specifically, the weighting coefficient for the stereoscopic distance measurement value is set as $\alpha s$, and the weighting coefficient for the monocular distance measurement value is set as $\alpha t$, such that $\alpha s > \alpha t$. Then, the processing of step S708 is performed.

On the other hand, in step S707, the integrated distance measuring unit 24 sets a weighting coefficient which emphasizes the monocular distance measurement value. More specifically, the weighting coefficient for the stereoscopic distance measurement value is set as $\alpha s$, and the weighting coefficient for the monocular distance measurement value is set as $\alpha t$, such that $\alpha s < \alpha t$. That is, in a case where the flatness of the object is low, the weighting coefficient for the monocular distance measurement value is greater than that in the case where the flatness is high. Then, the processing of step S708 is performed. These weighting coefficients may also be varied according to the reliability of the distance or the coordinates within the image. In a case where there is a difference in resolution among the camera units based on their respective optical characteristics, by setting weighting coefficients according to coordinates within the image, a weighting coefficient which emphasizes the distance measurement value of the camera unit in which the object region to be set is located in a high-resolution region can be set. The weighting coefficient as used herein may refer, for example, to a case where the weight of the emphasized distance measurement value is set to 80 and the weight of the non-emphasized distance measurement value is set to 20, or to a case where the weight of the emphasized distance measurement value is set to 100 and the weight of the non-emphasized distance measurement value is set to 0. The latter case corresponds to using only the emphasized distance measurement value.

In step S708, the integrated distance measuring unit 24 generates an integrated distance measurement value, which is distance information including the distance and its reliability for each pixel within the corresponding object region, by combining a plurality of distance measurement values using the set weighting coefficients. The method of combining the distance measurement values may be a general weighted average, which is expressed by the following equation:

Integrated Distance Measurement Value = (Stereoscopic Distance Measurement Value $\times$ $\alpha s$ + Monocular Distance Measurement Value $\times$ $\alpha t$) / ($\alpha s + \alpha t$)

The integrated distance measuring unit 24 generates the integrated distance measurement signal sig208 by storing the generated integrated distance measurement value in a memory (not illustrated) so as to correspond to the image-processed signal sig204.

In step S709, after the processing of steps S708 and S712, the integrated distance measuring unit 24 determines whether or not the integrated distance measurement values have been generated for all the object regions. In a case where there is any object region for which the integrated distance measurement value has not yet been generated, the flow returns to step S702. In a case where the generation has been completed for all the object regions, this calculation processing is terminated.

In the cat region 805 illustrated in Fig. 8B, based on a condition of the flatness, and in the wall surface region 806, based on a condition of the texture, the monocular distance measurement value is emphasized in step S707. Here, it is assumed that the optical characteristics of the front camera unit 11 and the left-front camera unit 16 are such that the resolution is higher closer to the optical axis. In this case, since the positions of the cat imaged by the front camera unit 11 and the left-front camera unit 16 are approximately equally distant from the optical axes of both camera units 11 and 16, weighting coefficients are set such that the weights of the monocular distance measurement values of the camera units 11 and 16 are equal. More specifically, letting $\alpha s$ be the weighting coefficient for the stereoscopic distance measurement value, and $\alpha t1$ and $\alpha t6$ be the weighting coefficients for the monocular distance measurement values of the camera units 11 and 16 respectively, weighting coefficients are set such that:

$$\alpha s < \alpha t1,$$

and

$$\alpha t1 \approx \alpha t6.$$

As for the wall surface region 806, since the distance from the optical axis to the wall surface imaged by the left-front camera unit 16 is shorter than the distance from the optical axis to the wall surface imaged by the front camera unit 11, a weighting coefficient which emphasizes the weight of the monocular distance measurement value of the left-front camera unit 16 is set. As for the preceding vehicle region 807, a weighting coefficient which emphasizes the stereoscopic distance measurement value is set. As for the oncoming vehicle region 808, the monocular distance measurement value obtained by the front camera unit 11 is adopted as the integrated distance measurement value.

In this embodiment, although monocular cameras having distance measuring functions are used for all of the camera units 11 to 16, it is not necessary for all of the camera units to output monocular distance measurement values. In order to obtain two distance measurement values, namely a stereoscopic distance measurement value based on a long base length and a monocular distance measurement value based on a short base length, in an overlapping region of imaging ranges, it is sufficient that a monocular distance measurement value is output from the image data captured by one of a pair of adjacent camera units. In other words, one of the pair of the adjacent camera units may be a monocular camera without a distance measuring function.

In this embodiment, based on the characteristics such as the flatness and texture of an object, the integrated distance measurement value as a final distance information is generated by prioritizing (emphasizing) the one having higher distance measuring accuracy among the stereoscopic distance measurement value and the monocular distance measurement value. For this reason, highly accurate distance information can be obtained even for an object having low flatness or an object having a repetitive pattern, which exists in the vicinity of the vehicle 1.

SECOND EMBODIMENT

In the first embodiment, the camera units 11 to 16, each serving as a monocular camera, are installed in the vehicle 1 to image the surroundings of the vehicle 1. In a second embodiment, a single monocular camera having a distance measuring function and two monocular cameras not having a distance measuring function are installed in the vehicle 1, with the same direction being set as the imaging range.

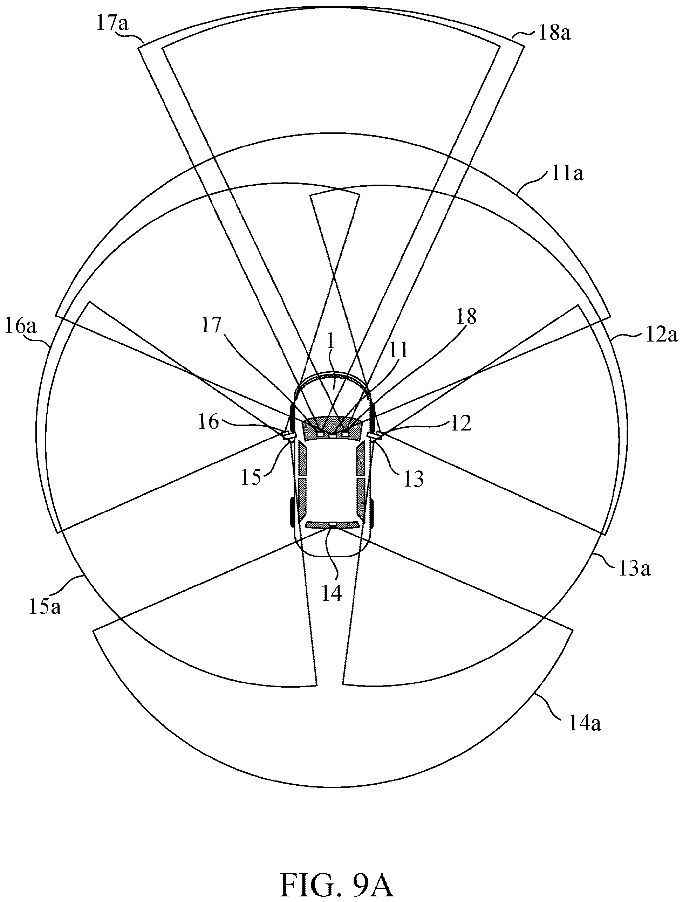

Fig. 9A is a top view which illustrates the vehicle 1 and eight camera units 11 to 18 installed on the vehicle according to the second embodiment. Similarly to the first embodiment, each of the camera units 11 to 16 is a monocular camera serving as an image pickup apparatus which generates a captured image by capturing an image of an object using an image sensor through an optical system, and has a distance measuring function using phase difference detection pixels as phase difference sensors included in the image sensor. Reference numerals 11a to 16a respectively denote imaging ranges of the camera units 11 to 16.

On the other hand, the camera units 17 and 18 do not have a distance measuring function and are arranged on the inside of a windshield of the vehicle 1 with a spacing in the left-right direction so as to have the front of the vehicle as their imaging range. Reference numerals 17a and 18a respectively denote the imaging ranges of the camera units 17 and 18. The camera units 17 and 18 are general-purpose in-vehicle cameras, and a description of their configuration is omitted.

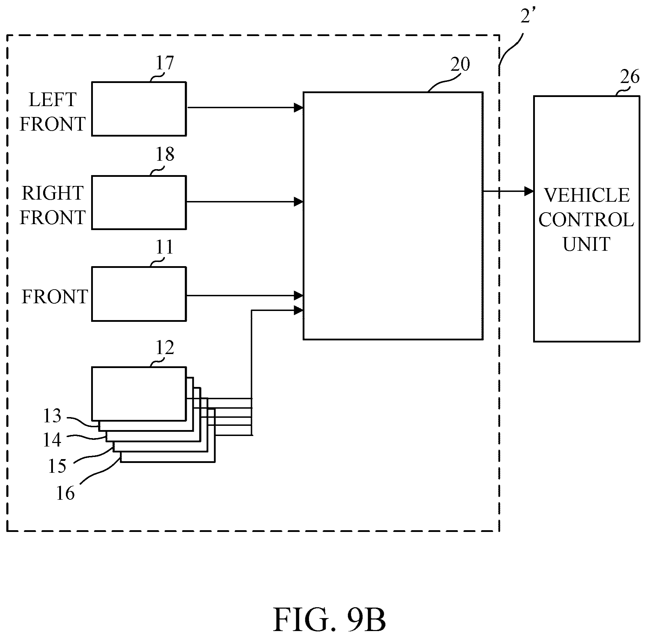

Fig. 9B illustrates a configuration of a distance measuring apparatus 2' according to this embodiment. The configuration of the processor 20 is the same as that of the first embodiment illustrated in Fig. 2. The camera units 17 and 18 output only captured image data without outputting distance data and reliability data. The processor 20 receives, in addition to the captured image data, distance data, and reliability data which are input from the camera units 11 to 16, a pair of captured image data input from the camera units 17 and 18 as one of the stereoscopic image signals sig203. The camera units 17 and 18 and the stereoscopic distance measuring unit 23 correspond to the second distance measuring unit.

The processing executed by the integrated distance measuring unit 24 is the same as the processing in the first embodiment illustrated in Fig. 7. However, a stereoscopic distance measurement value calculated using the pair of captured image data input from the camera units 17 and 18 is added as distance measurement values to be evaluated and combined.

Thereby, in the example of Fig. 8B, the integrated distance measurement value which emphasizes the monocular distance measurement value is generated for the cat region 805 and the wall surface region 806, similarly to the first embodiment. Although for the preceding vehicle region 807, the integrated distance measurement value which emphasizes the stereoscopic distance measurement value is combined, unlike in the first embodiment, three stereoscopic distance measurement values corresponding to the preceding vehicle region 807 are obtained. More specifically, these are the stereoscopic distance measurement values obtained from the pair of the camera units 11 and 16, the pair of the camera units 11 and 12, and the pair of the camera units 17 and 18. For these stereoscopic distance measurement values, weighting coefficients are set based on the reliability of the distance, the coordinates within the image, and the base length, and the integrated distance measurement value is generated. In distance measuring of distant objects, a stereoscopic distance measurement with a longer base length provides higher distance measuring accuracy, so the stereoscopic distance measurement value to be emphasized can be determined according to the distance measurement values.

In this embodiment, stereoscopic distance measuring using two camera units without a distance measuring function and monocular distance measuring using one camera unit with a distance measuring function are performed for imaging in the same direction. In contrast, a stereoscopic distance measurement value obtained using a combination of one of the two camera units without a distance measuring function and one camera unit with a distance measuring function may additionally be employed.

Further, in imaging in the same direction, a configuration using one camera unit without a distance measuring function and one camera unit with a distance measuring function may be adopted, in which one stereoscopic distance measurement value and one monocular distance measurement value are obtained.

In addition to the characteristics of the object, this embodiment can generate an integrated distance measurement value as final distance information by prioritizing (emphasizing) the one having higher distance measuring accuracy, among the stereoscopic distance measurement value and the monocular distance measurement value, in accordance with the distance to the object.

THIRD EMBODIMENT

In a third embodiment, a direction of the base length of a stereoscopic camera and a direction of the base length of a monocular camera having a distance measuring function are set to be different from each other. The configuration of the processor 20 in this embodiment is the same as that in the first embodiment.

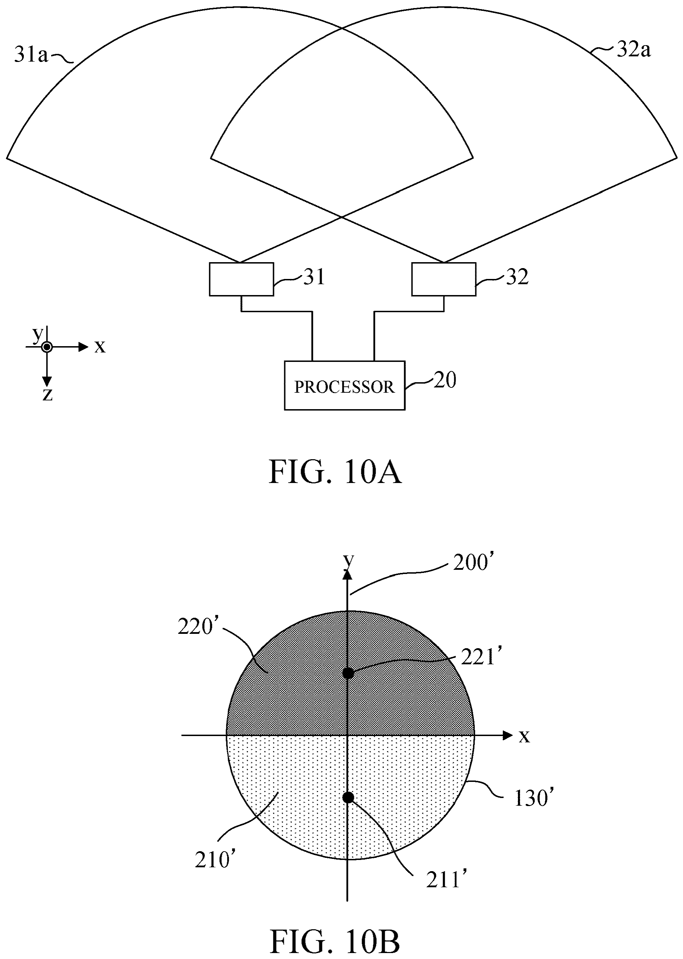

Fig. 10A illustrates an arrangement of two camera units 31 and 32 which constitute a stereoscopic camera in the third embodiment. The camera units 31 and 32 have the same configuration as the camera units 11 to 16 described in the first embodiment and are monocular cameras having a distance measuring function. Since the camera units 31 and 32 are arranged apart from each other in the x-axis direction, the direction of the base length of the stereoscopic camera is parallel to the x-axis. The camera units 31 and 32 respectively correspond to the first distance measuring units, and the second distance measuring unit is constituted by the camera units 31 and 32 and the stereoscopic distance measuring unit 23.

Fig. 10B illustrates an exit pupil 130' of the optical system as viewed from the center image height, which is an intersection point between the optical axis of each of the camera units 31 and 32 and the image sensor (imaging surface). A centroid position of a first pupil region 210' is indicated as a first centroid position 211', and a centroid position of a second pupil region 220' is indicated as a second centroid position 221'. In this embodiment, the first centroid position 211' is decentered (shifted) from the center of the exit pupil 130' along a first axis 200' parallel to the y-axis. On the other hand, the second centroid position 221' is decentered (shifted) in a direction opposite to the first centroid position 211' along the first axis 200'.

In Fig. 4B of the first embodiment, the first axis 200 is parallel to the x-axis, and the first centroid position 211 and the second centroid position 221 are separated in the x-axis direction. In contrast, in this embodiment, the first axis 200' is parallel to the y-axis, and the first centroid position 211' and the second centroid position 221' are separated in the y-axis direction. That is, the directions of the base lengths of the two monocular cameras are a direction parallel to the y-axis.

The processing by the integrated distance measuring unit 24 in this embodiment is substantially the same as the processing described in Fig. 7. However, when a repetitive pattern is detected in step S705, the flow proceeds to step S706 to place emphasis on the stereoscopic distance measurement value depending on the direction of the repetitive pattern.

More specifically, in a case of a repetitive pattern with a large amount of contrast change in the x-axis direction, a higher distance measuring accuracy can be obtained when the base length is set in the x-axis direction. For this reason, the stereoscopic distance measurement value obtained using the pair of camera units 31 and 32 is emphasized.

On the other hand, in a case of a repetitive pattern with a large amount of contrast change in the y-axis direction, a higher distance measuring accuracy can be obtained when the base length is set in the y-axis direction. For this reason, the monocular distance measurement value output by one of the camera units 31 and 32 is emphasized. Which of the two monocular distance measurement values is to be emphasized may be determined based on the reliability of the distance or the coordinates within the image.

Similarly, in a case where a repetitive pattern is detected in step S710, the subsequent step to proceed to is determined depending on the direction of the repetitive pattern.

This embodiment can acquire an integrated distance measurement value with high accuracy even for an object having a repetitive pattern in a specific direction, such as a vertical stripe or a horizontal stripe.

In this embodiment, either the monocular distance measurement value or the stereoscopic distance measurement value is emphasized in accordance with the direction of the repetitive pattern. However, this embodiment can also emphasize either the monocular distance measurement value or the stereoscopic distance measurement value in accordance with the period of the repetitive pattern. More specifically, in a case where the period of the repetitive pattern is small, erroneous detection of corresponding points in template matching is likely to occur, and therefore the monocular distance measurement value is emphasized. On the other hand, in a case where the period of the repetitive pattern is sufficiently large and erroneous detection does not occur within the search region 905 illustrated in Fig. 11E, the stereoscopic distance measurement value may be emphasized.

FOURTH EMBODIMENT

In a fourth embodiment, the directions of the base lengths of two monocular cameras, each having a distance measuring function, are set to be different from each other.

The arrangement of two camera units 31 and 32, each of which is a monocular camera, is the same as that illustrated in Fig. 10A of the third embodiment. The camera units 31 and 32 have the configuration described in the first embodiment and are monocular cameras having a distance measuring function. The camera units 31 and 32 are arranged apart from each other in the x-axis direction, and the direction of the base length in stereoscopic distance measuring is parallel to the x-axis.

Further, the direction of the base length in monocular distance measuring by the camera unit 31 is a direction parallel to the x-axis as illustrated in Fig. 4B, and the direction of the base length in monocular distance measuring by the camera unit 32 is a direction parallel to the y-axis as illustrated in Fig. 10B.

The processing by the integrated distance measuring unit 24 in this embodiment is approximately similar to the processing described in Fig. 7. However, in a case where a repetitive pattern is detected in step S705 and the processing of step S707 is performed, the monocular distance measurement value to be emphasized is determined in accordance with the direction of the repetitive pattern.

More specifically, in a case of a repetitive pattern in which the contrast change amount is large in the x-axis direction, a base length set in the x-axis direction provides higher distance measuring accuracy. Thus, the monocular distance measurement value output by the camera unit 31 is emphasized.

On the other hand, in a case of a repetitive pattern in which the contrast change amount is large in the y-axis direction, a base length set in the y-axis direction provides higher distance measuring accuracy. For this reason, the monocular distance measurement value output by the camera unit 32 is emphasized.

Regardless of the direction of the repetitive pattern, this embodiment prioritizes a monocular distance measurement value obtained by a camera unit having a short base length to obtain an integrated distance measurement value. For this reason, an integrated distance measurement value with high accuracy can be obtained even for an object having a repetitive pattern in a specific direction, such as a vertical stripe or a horizontal stripe.

In the above embodiments, the distance measuring apparatus is mounted on a vehicle as a movable unit. However, it may also be mounted on other movable units such as a ship, an aircraft, and an industrial robot. Furthermore, the disclosure is not limited to being mounted on a movable unit, and can also be applied to various devices which utilize object recognition, such as intelligent transportation systems (ITS).

OTHER EMBODIMENTS

Embodiment(s) of the disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

Each embodiment according to the disclosure can generate distance information on the object regardless of the characteristics of the object.

**Claims**

1. A distance measuring apparatus (2) comprising:

   a distance measuring unit configured to perform distance measurement for an object based on a phase difference obtained by receiving light from the object using two light receivers (161, 162, 101), the distance measuring unit including a first distance measuring unit (11) configured to perform distance measurement with a first base length (w), and a second distance measuring unit (11, 16) configured to perform distance measurement with a second base length which is longer than the first base length;
   an acquiring unit (24, 25) configured to acquire a characteristic of the object, and
   a generator (102) configured to generate distance information on the object,
   **characterized in that** the generator is configured to generate the distance information using at least one of distance measurement results obtained respectively by the first distance measuring unit and the second distance measuring unit, in accordance with the characteristic.

2. The distance measuring apparatus according to claim 1, **characterized in that** the generator generates the distance information by weighting the distance measurement results obtained respectively by the first distance measuring unit and the second distance measuring unit, in accordance with the characteristic.

3. The distance measuring apparatus according to claim 1 or 2, **characterized in that** the first distance measuring unit performs the distance measurement based on the phase difference obtained by a camera including an image sensor having the two light receivers in a single pixel,
   wherein the second distance measuring unit performs the distance measurement based on the phase difference obtained by two cameras each including an image sensor as the light receiver.

4. The distance measuring apparatus according to any one of claims 1 to 3, **characterized in that** a direction of the first base length and a direction of the second base length are different from each other.

5. The distance measuring apparatus according to any one of claims 1 to 4, **characterized in that** the distance measuring apparatus includes at least two of first distance measuring units in which directions of first base lengths are different from each other.

6. The distance measuring apparatus according to any one of claims 1 to 5, **characterized in that** the distance measuring apparatus includes a plurality of first distance measuring units each using a camera,
   wherein the second distance measuring unit performs the distance measurement using cameras of two of the plurality of first distance measuring units.

7. The distance measuring apparatus according to any one of claims 1 to 6, **characterized in that** the characteristic of the object is flatness of the object.

8. The distance measuring apparatus according to claim 7, **characterized in that** the generator is configured to:

   generate the distance information by weighting the distance measurement results obtained respectively by the first distance measuring unit and the second distance measuring unit, in accordance with the flatness,
   make, in a case where the flatness is lower than a predetermined value, a weighting coefficient of the weighting on the distance measurement result obtained by the first distance measuring unit greater than a weighting coefficient of the weighting on the distance measurement result obtained by the second distance measuring unit, and make, in a case where the flatness is higher than the predetermined value, a weighting coefficient of the weighting on the distance measurement result obtained by the second distance measuring unit greater than a weighting coefficient of the weighting on the distance measurement result obtained by the first distance measuring unit.

9. The distance measuring apparatus according to claim 7, **characterized in that** the flatness is a flatness corresponding to a distance to the object.

10. The distance measuring apparatus according to any one of claims 1 to 6, **characterized in that** the characteristic of the object is a texture of the object.

11. The distance measuring apparatus according to claim 10, **characterized in that** the generator is configured to:

   generate the distance information by weighting the distance measurement results obtained respectively by the first distance measuring unit and the second distance measuring unit, in accordance with the texture,
   make, in a case where the texture is a repetitive pattern, a weighting coefficient of the weighting on the distance measurement result obtained by the first distance measuring unit greater than a weighting coefficient of the weighting on the distance measurement result obtained by the second distance measuring unit, and
   make, in a case where the texture is not a repetitive pattern, a weighting coefficient of the weighting on the distance measurement result obtained by the second distance measuring unit greater than a weighting coefficient of the weighting on the distance measurement result obtained by the first distance measuring unit.

12. The distance measuring apparatus according to claim 10, **characterized in that** a direction of the first base length and a direction of the second base length are different from each other,
   wherein the generator is configured to change weighting to the distance measurement result to be used for generating the distance information, among the distance measurement results obtained by the first distance measuring unit and the second distance measuring unit, in accordance with at least one of a direction and a period of a repetitive pattern as the texture.

13. The distance measuring apparatus according to any one of claims 1 to 12, **characterized in that** the generator is configured to:

   acquire a reliability of the distance measurement result obtained by the first distance measuring unit,
   generate, in a case where a plurality of characteristics are acquired, the distance information using at least one of the distance measurement results obtained respectively by the first distance measuring unit and the second distance measuring unit, in accordance with a result of determination for each of the plurality of characteristics, and
   change an order of the determination for the plurality of characteristics in accordance with the reliability.

14. A movable-unit control apparatus comprising:

   the distance measuring apparatus (2) according to any one of claims 1 to 13; and
   a control unit (26) configured to control a movable unit based on the distance information.

15. A distance measuring method using a distance measuring unit configured to perform distance measurement for an object based on a phase difference obtained by receiving light from the object using two light receivers (161, 162, 101), the distance measuring unit including a first distance measuring unit (11) configured to perform distance measurement with a first base length (w), and a second distance measuring unit (11, 16) configured to perform distance measurement with a second base length which is longer than the first base length, the method comprising:

   acquiring a characteristic of the object; and
   generating distance information on the object using at least one of distance measurement results obtained respectively by the first distance measuring unit and the second distance measuring unit, in accordance with the characteristic.

16. A program which causes a computer to execute a distance measuring method according to claim 15.

FIG. 1

FIG. 2

FIG. 3A

FIG. 3B

FIG. 3C

FIG. 4A

FIG. 4B

START

ACQUIRE PHASE DIFFERENCE IMAGE DATA — S501

CORRECT LIGHT QUANTITY BALANCE — S502

PERFORM DISTANCE CALCULATION PROCESSING — S503

PERFORM RELIABILITY CALCULATION PROCESSING — S504

END

## FIG. 5A

DISTANCE CALCULATION PROCESSING

CALCULATE IMAGE SHIFT AMOUNT — S531

CONVERT IMAGE SHIFT AMOUNT INTO DEFOCUS AMOUNT — S532

CONVERT DEFOCUS AMOUNT INTO OBJECT DISTANCE — S533

END

## FIG. 5B

RELIABILITY CALCULATION PROCESSING

CALCULATE CONTRAST CHANGE AMOUNT ALONG FIRST AXIS — S541

CALCULATE REPRESENTATIVE VALUE OF CONTRAST CHANGE AMOUNT ALONG SECOND AXIS — S542

END

## FIG. 5C

FIG. 6A

FIG. 6B

EP 4 707 858 A1

START

SEGMENT IMAGE — S701

HAVE A PLURALITY OF DISTANCE MEASUREMENT VALUES BEEN OBTAINED? — S702

NO

YES

EVALUATE RELIABILITY OF DISTANCE — S703

LOW

HIGH

EVALUATE FLATNESS — S704

LOW

YES

IS TEXTURE REPETITIVE PATTERN? — S710

NO

HIGH

IS TEXTURE REPETITIVE PATTERN? — S705

YES

LOW

EVALUATE FLATNESS — S711

HIGH

NO

S706

EMPHASIZE STEREOSCOPIC DISTANCE MEASUREMENT VALUE

EMPHASIZE MONOCULAR DISTANCE MEASUREMENT VALUE — S707

S712 — SELECTS DISTANCE MEASUREMENT VALUE

GENERATE INTEGRATED DISTANCE MEASUREMENT VALUE — S708

HAVE ALL OBJECT IMAGES BEEN COMPLETED? — S709

NO

YES

END

FIG. 7

FIG. 8A

FIG. 8B

FIG. 9A

FIG. 9B

31a

32a

31

32

y

x

z

PROCESSOR

20

## FIG. 10A

200'

220'

221'

x

130'

210'

211'

y

## FIG. 10B

FIG. 11A

901b

901c

## FIG. 11B

902b

902c

## FIG. 11C

901b

y1

901c

P

## FIG. 11D

x1

902b

902c

R    Q1

905

Q2
Q3

## FIG. 11E

x1

# EUROPEAN SEARCH REPORT

**Application Number**

EP 25 20 0704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/295646 A1 (SUEYOSHI YUICHI [JP]) 5 September 2024 (2024-09-05) <br> * paragraph [0002] - paragraph [0038] * <br> * paragraph [0051] - paragraph [0073] * <br> * paragraph [0086] - paragraph [0088] * <br> * figures 1-9 * <br> * claims 1-10 * <br> ----- | 1-16 | INV. <br> G01S11/12 |
| A | US 2017/221228 A1 (HAYASAKA KENGO [JP]) 3 August 2017 (2017-08-03) <br> * the whole document * <br> ----- | 1-16 | |
| A | US 2022/321871 A1 (OIGAWA MAKOTO [JP] ET AL) 6 October 2022 (2022-10-06) <br> * the whole document * <br> ----- | 1-16 | |

**TECHNICAL FIELDS SEARCHED (IPC)**

G01S

The present search report has been drawn up for all claims

| Place of search | Date of completion of the search | Examiner |
|---|---|---|
| Munich | 22 December 2025 | Galmiche, Aurélien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 0704

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2025

| Patent document cited in search report | | Publication date | Patent family member(s) | | Publication date |
|---|---|---|---|---|---|
| US 2024295646 | A1 | 05-09-2024 | EP | 4450922 A1 | 23-10-2024 |
| | | | JP | 2024125077 A | 13-09-2024 |
| | | | US | 2024295646 A1 | 05-09-2024 |
| US 2017221228 | A1 | 03-08-2017 | CN | 104380342 A | 25-02-2015 |
| | | | JP | 5929553 B2 | 08-06-2016 |
| | | | JP | 2014011526 A | 20-01-2014 |
| | | | TW | 201403031 A | 16-01-2014 |
| | | | US | 2015104076 A1 | 16-04-2015 |
| | | | US | 2017221228 A1 | 03-08-2017 |
| | | | WO | 2014002492 A1 | 03-01-2014 |
| US 2022321871 | A1 | 06-10-2022 | EP | 4067813 A1 | 05-10-2022 |
| | | | JP | 7718837 B2 | 05-08-2025 |
| | | | JP | 2022154179 A | 13-10-2022 |
| | | | US | 2022321871 A1 | 06-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023129847 A